# EUROPEAN PATENT APPLICATION

(11) **EP 4 826 942 A1**
(43) Date of publication of application: **21.10.2026**
(21) Application number: 25170455.7
(22) Date of filing: 14.04.2025
(51) Int. Cl.: H02J 3/14, C25B 1/04, C25B 15/02, H02J 3/24

(54) **METHOD FOR POWER OSCILLATION DAMPING IN A POWER SUPPLY NETWORK BY MEANS OF A CONNECTED ELECTROLYSIS PLANT AND ELECTROLYSIS PLANT WITH POWER OSCILLATION DAMPING MODE**

(71) Applicant: Siemens Energy Global GmbH & Co. KG, 81739 München (DE)
(72) Inventor: Schumann, Sven, 91452 Wilhermsdorf (DE); Wall, Dirk, 45475 Mülheim (DE); Loku, Fisnik, 90439 Nürnberg (DE); Langenberg, Nils, 90461 Nürnberg (DE); Craciun, Bogdan, 91052 Erlangen (DE); Bendig, Marvin, 90513 Zirndorf (DE)

(57) **Abstract**

A method 200 for power oscillation damping in an AC power supply network by means of a connected electrolysis plant is presented, wherein the electrolysis plant comprises one or more electrolysis systems, each having at least a transformer unit, one or more rectifier units, and a set of electrolyser units connected to a DC side of the one or more rectifier units. The method 200 comprises measuring 202 a magnitude and an oscillation frequency of a power oscillation signal corresponding to an active power signal in the AC power supply network, and determining 203 the amplitude for oscillations with frequencies below the system's main frequency of the active power signal; and if said amplitude(s) is greater than a pre-defined threshold 204, changing 205 an operation mode of the electrolysis plant from a normal operation mode into a power oscillation damping mode and in said power oscillation damping mode, changing 206 an operation set point of a power consumption of the set of electrolyser units depending on a change of the magnitude of the active power signal.

## Description

The present disclosure in general relates to countermeasures against power oscillation events in a power supply network, e.g., a direct current (DC) power grid or an alternating current (AC) power grid, connected to an electrolysis plant, i.e., a large-scale electrolysis system or assembly of multiple electrolysis systems. More particularly, the present disclosure relates to a method for power oscillation damping in a power supply network by means of a connected electrolysis plant and to an electrolysis plant with power oscillation damping mode. Further, the present disclosure relates to a computer program product, a computer-readable storage medium and a data carrier signal.

In power supply networks such as the public AC power grid, power oscillations can occur, particularly when network participants are interconnected via long transmission lines. These power oscillations can be encountered, for example, when a network participant such as a large power generating plant or a large load or power consuming plant such as a large electrolysis plant is switched off or on, or other disturbances in the network occur. Such events may cause an oscillating change in the power provided by the network that may decay over time, slowly or quickly. These oscillations may appear with a frequency in the range of 0.1 Hz - 2.5 Hz, sometimes even up to 10, 20 or 50 Hz and are superimposed to the nominal power signals in the system.

Network operators require the actively controllable network participants to compensate for these power fluctuations to keep the network stable and avoid critical conditions for connected power generators and consumers. This means that when the available power in the network increases, generators should feed less power into the power supply network, i.e., the power grid. Ideally, generation units would always reduce their power exactly when the available power in the network unexpectedly increases, or increase their power exactly when the power in the network unexpectedly decreases. For power oscillation damping this behaviour will take place in a repetitive way to counter the unwanted oscillation.

Therefore, local grid code requirements by network operators contain requirements for generators to actively counter active power oscillations in the power grid. Additionally, local grid code requirements contain requirements for actively controllable power consuming loads. Therefore, connecting large electrolysis plants to the public power grid also requires compliance with the fulfillment of the local grid code requirements, in particular to the requirements directed to actively counter active power oscillations in the power grid. For an electrolysis plant, this means that whenever the available power in the grid increases, the electrolysis plant should increase its power consumption, e.g., by feeding more direct current into the electrolysis stacks of its electrolyser units. Additionally, the electrolysis plant should reduce its power intake in case the available power in the grid decreases, and so on.

However, a detection and reaction scheme could be too slow to counter such behavior efficiently, depending, e.g., on the reaction time of controllers of the electrolysis plant and its electrolysis systems.

It is an objective of the present invention to provide an efficient and fast way of removing or damping oscillating power fluctuations in a power supply network having connected an electrolysis plant.

This objective is solved by a method for power oscillation damping in a power supply network by means of a connected electrolysis plant as stated in claim 1, an electrolysis plant as stated in claim 10, a computer program product as stated in claim 13, and a corresponding computer readable storage medium and data carrier signal as stated in claims 14 and 15, respectively. Advantageous additional embodiments of the invention are disclosed in the respective dependent claims.

According to a first aspect of the invention, a method for power oscillation damping in a power supply network by means of a connected electrolysis plant, wherein the electrolysis plant comprises one or more electrolysis systems, each having at least a transformer unit, one or more rectifier units, and a set of electrolyser units which is connected to a direct current (DC) side of the one or more rectifier units, comprises the steps of measuring a magnitude and a mains or main frequency of a power oscillation signal corresponding to an active power signal in the power supply network, and determining amplitudes for one or more oscillations, i.e., superimposed oscillations, with frequencies below the main frequency of the active power signal. And if at least one of said amplitudes is greater than a pre-defined threshold, the method further comprises changing an operation mode of the electrolysis plant from a normal operation mode into a power oscillation damping (POD) mode and in said power oscillation damping mode, changing an operation set point of a power consumption of the set of electrolyser units depending on a change of the magnitude of the active power signal.

The term "a set of electrolyser units" refers to "one or more electrolyser units". An electrolyser unit comprises one or more electrolyser rows or stacks with multiple electrolysis cells, wherein the electrolysis process, e.g., the electrolysis of water to split water into oxygen and hydrogen, is carried out using direct current, which is generated from the AC power provided from the AC power supply network by means of transformation and rectification in the transformer unit and rectifier units of the one or more electrolysis systems of the electrolysis plant.

A power oscillation signal that corresponds to an active power signal in the power network is a signal that is either identical to the active power signal as determined, e.g., from measurement at the point of connection (POC) to the power network, i.e., it is the active power signal, or (for an AC power network) it can be a signal determined by measurement at another point on an AC power receiving side of the power conversion part, in particular the transformer unit or the AC side of the one or more rectifier units, of an electrolysis system of the electrolysis plant, where the signal exhibits the same oscillation frequency as the frequency of the active power signal in the AC power network. In case the power oscillation signal is not measured at the POC anyway, the change of the magnitude of the active power signal can be determined from the change of the measured power oscillation signal taking into account the physical parameters of the electrolysis system, in particular of the transformer unit, where the current and voltage signals for determining the power oscillation signal are measured.

The pre-defined threshold defines a threshold above which the electrolysis plant refrains from switching into the power oscillation damping mode. The pre-defined threshold may be set to, e.g., 1% of the main frequency, or the electrolysis plant may switch to the power oscillation damping mode each time an additional frequency below the main power frequency is detected. In a DC network the power oscillation damping mode might be activated whenever a frequency in a defined frequency range above a pre-defined threshold is detected.

The operation set point of the power consumption of the set of electrolyser units is defined by the operation set points of each of the set of electrolyser units, which may be set identically or differently for each individual electrolyser unit, e.g., by dynamically adjusting the input DC current provided by the rectifier units and applied to the input of each individual electrolyser unit. In an embodiment where the rectifier units are built from thyristor rectifier circuits, the DC current provided by the rectifier units can be adjusted, e.g., by changing the firing angles of the thyristor circuits.

By changing the operation set point of the power consumption of the set of electrolyser units depending on a change of the magnitude of the active power signal the power consumption can be adjusted dynamically according to the oscillating, changing magnitude of the active power signal. Preferably, in the power oscillation damping mode, the change of the power consumption of the electrolysis plant is driven by the change of the magnitude of the active power signal in the power supply network with no or only very short delay.

The power oscillation damping mode allows to employ the electrolysis plant for dampening the power oscillation in the power supply network by increasing or decreasing the active power consumption of the electrolysis plant depending on the changes of available active power in the power supply network.

In an embodiment, the method for power oscillation damping in a power supply network by means of a connected electrolysis plant further comprises a step of adjusting one or more non-electric processing parameters of at least one electrolysis process carried out in the set of electrolyser units. The term "non-electric processing parameters" refers to downstream parameters of the one or more electrolysis systems of the electrolysis plant which are not related the AC/DC power conversion and provision of DC current to the electrolyser units but to an adjustment of mass-flow, pressures, cooling etc. to keep the H2 and O2 gas production process stable although the operation set point of one or more electrolyser units is changed. This allows to keep the gas production process stable and avoid any safety shutdown or disconnection due to, e.g., uncontrolled high H2 gas concentrations in any part of an electrolyser unit. Examples for non-electric processing parameters are the O2 and/or H2 product gas mass-flow, parameters of the O2 and/or H2 gas compression systems, O2 and/or H2 product gas control valve positions, O2 and/or H2 blowoff valve positions, O2 and/or H2 product gas pressure controls, filling levels, cooling water control valve or other cooling system parameters.

In an example embodiment of the method, the step of adjusting one or more non-electric processing parameters is only carried out if the frequency of said one or more oscillations is below a defined first frequency threshold. The first frequency threshold depends on the physical properties of the one or more electrolysis systems, in particular on the characteristics and technology used in the set of electrolyser units. If the frequency of the one or more oscillations, i.e., of the unwanted power oscillation, is at or above the first frequency threshold, the power oscillates with a frequency too high to cause a measurable oscillation in the gas production, pressure and mass flow in the electrolysers and/or downstream process of the electrolysis system and, therefore, the process does not have to be adjusted, since the power oscillation can be considered to merely cause an additional ripple on the DC current provided to the set of electrolyser units. In such a case, gas production is considered to be unchanged. Below the first frequency threshold, an oscillation of process parameters due to the unwanted power oscillation must be considered and the plant operated in a different way.

In an example embodiment, the first frequency threshold is at least 10 Hz. In another example, the first frequency threshold may be higher, e.g., 20, 30 or even 50 Hz. The oscillating power deviations may appear with a frequency in the range of 0.1 Hz up to 2.5 Hz, but sometimes even up to 10, 20 or 50 Hz.

In an embodiment, the step of adjusting one or more non-electric processing parameters is carried out for an adjustment of power intake by the set of electrolysis units, if the frequency of the one or more oscillations is below a second frequency threshold. The step is carried out in order to adjust the power intake of the set of electrolyser units, e.g., by cooling means and not necessarily by changing a converter's set-point, e.g., a DC current setpoint. Adjusting the power intake by process-related means can have different or additional limitations than the oscillations on the process side and may require a second frequency threshold different from the first.

In another embodiment of the method for power oscillation damping in an AC power supply network by means of a connected electrolysis plant, the step of changing the operation set point of the power consumption of the set of electrolyser units depending on the change of the magnitude of the active power signal comprises limiting said change to keep the operation set point between a lower operating limit and an upper operating limit of the set of electrolyser units defined with respect to safety considerations of the electrolysis processing performed in the set of electrolyser units. The power oscillation damping mode may include an adjustment of the basic set point, i.e., the operation set point of the normal operation mode, of one or more electrolysis systems, which is then superimposed by the oscillation for the necessary load oscillations in order to better counter it. In an embodiment, a differentiation based on the type and characteristics of the electrolyser units of the electrolysis system may be applied, for example considering higher dynamic for proton exchange membrane (PEM) electrolysis vs. lower dynamic for alkaline electrolysis. PEM electrolysis is the electrolysis of water in a cell equipped with a solid polymer electrolyte (SPE). Alkaline water electrolysis is characterized by having two electrodes operating in a liquid alkaline electrolyte. The basic set point during power oscillation damping mode should be set between the lower and upper operating limits of the set of electrolyser units such that it most likely allows the necessary load oscillations without exceeding these limits. However, the change of the oscillating operation point will not be allowed to cross the lower and upper operating limits to keep the electrolysis processing stable. In a preferred embodiment, the power adjustment is pre-defined for each individual electrolysis unit. If power oscillation is detected, the basic set points of each unit are checked and if necessary superimposed by a delta-setpoint to allow the full range of power adjustment without violating the upper or lower operating threshold.

In an alternative embodiment, the power adjustment is calculated from the detected power oscillation amplitude.

In an example embodiment, the step of limiting said change to keep the operation set point between the lower operating limit and the upper operating limit of the set of electrolyser units comprises limiting said change to keep the operation set point at least a further safety margin away from at least one of the lower operating limit and the upper operating limit. For example, the safety margin may be 10% of the value of the upper or lower operating limit. Alternatively, the operation set point can be adjusted from the normal operation mode basic set-point based on a required load-adjustment range. For example, a load adjustment of ±10% affects a system operating at 100% load in a way that the basic set point is adjusted to 90%, possibly with a safety margin, thus allowing an increase of 10% without exceeding the limits.

In another example embodiment, if deemed uncritical from a safety perspective, the lower operating limit can be reduced even below an acceptable operational lower limit intended to prevent a critical gas concentration in the electrolyser unit. Since the electrolyser unit only operates for short periods below the acceptable operational lower limit and its gas production is increased to significantly higher levels afterwards, a reduction may be applicable without risk for the electrolysis plant. That is, if the electrolysis system features short-term overload capacity, a reduction of the basic operation set point could be neglected (or only done in a slight way) even when operating at the maximum operating point, and instead a periodical, short-term excess of the operating limit may be allowed.

In yet another example embodiment, in case the acceptable operational lower limit is undercut for longer periods, the minimum operation set point can be adjusted to correspond to the minimum operating point of the plant and the power consumption is only increased periodically as a countermeasure. In other words, should the system operate at any of its operating thresholds (or for other reasons), it is also possible to enable a power oscillation of the electrolyser units only in one direction (like only reducing from 100% to 90%) or to apply the oscillation in a non-symmetric manner (e.g., between +10 and -5% from the reference value).

In an alternative embodiment, the basic setpoint of an electrolysis system is shifted to be (roughly) in the middle between the upper and lower operating limit, to enable utilization of the full load range of it.

In an embodiment of the method for power oscillation damping in an AC power supply network by means of a connected electrolysis plant, the step of measuring a magnitude and an oscillation frequency of a power oscillation signal corresponding to an active power signal in the AC power supply network comprises measuring an input voltage signal and an input current signal at a point of connection (POC) of the electrolysis plant to the AC power supply network. Here, the power oscillation signal and its oscillation frequency can be directly determined from the measured input voltage and input current signals and is identical to the active power signal in the AC power supply network. However, the oscillation frequency of a power oscillation signal that corresponds to the active power signal in the AC power supply network (i.e.**,** at least allows to calculate the active power signal in the AC power supply network from the measured signals by taking into account the physical parameters of the electrolysis plant) can be determined from measurements of the input voltage and current signals, e.g., at the primary side of the transformer unit of an electrolysis system of the electrolysis plant, such as a grid coupling high voltage transformer, or any other point on the AC side of the AC/DC conversion part of the electrolysis system, at which the frequency of the grid, i.e., the AC power supply network, can be observed. Analysing the corresponding frequencies of the signals, any additional oscillation below the system's main frequency in the resulting power signals can be detected.

In an embodiment, the method for power oscillation damping in an AC power supply network by means of a connected electrolysis plant further comprises a step of, when in the power oscillation damping mode, monitoring the oscillations, i.e., the amplitude of frequencies below the main frequency , in other words monitoring the amplitudes of the one or more oscillations, and if at least one of said amplitudes is not greater than the pre-defined threshold any more, or if the amplitudes are not greater than the pre-defined threshold, changing the operation mode of the electrolysis plant from the power oscillation damping mode to the normal operation mode and in said normal operation mode, changing the operation set point of the power consumption of the set of electrolyser units to a pre-defined operation set point. That is, once the amplitude of oscillations with frequencies below the main frequency returns into the defined dead band, the power oscillation event is considered over and the specifically activated power oscillation damping (POD) mode can be ended. The electrolysis plant changes automatically or, in an alternative embodiment, with approval of an operator, to pre-defined set points. In a preferred example embodiment, the pre-defined set points are the pre-fault set points, which had been stored at the beginning of the power oscillation event before switching into POD mode. Depending on the embodiment, if the basic set point has been changed during the event, approval of the operator may be required.

According to a second aspect of the invention, an electrolysis plant with power oscillation damping (POD) mode comprises one or more electrolysis systems, each having at least a transformer unit, one or more rectifier units and a set of electrolyser units connected to a DC side of the one or more rectifier units, means for measuring a magnitude and an oscillation frequency of a power oscillation signal corresponding to an active power signal in a connected power supply network, and a controller arrangement configured to operate the electrolysis plant according to a method for power oscillation damping according to the first aspect of the invention. The term "controller arrangement" refers to one or more controllers, e.g., programmable apparatuses comprising at least a processor and a memory device, potentially dedicated to different tasks of the method and/or to different levels of control. The electrolysis plant with POD mode according to the second aspect of the invention is, therefore, configured to execute steps of the method for power oscillation damping according to the first aspect of the invention and therefore implements the advantages and characteristics of the claimed method.

In an embodiment of the electrolysis plant, the controller arrangement comprises an electrolysis system controller and at least one lower-level controller configured to override and either dynamically change depending on a change of a magnitude of an active power signal in the power supply network, or non-dynamically change based on a pre-defined value an operation set point of a power consumption of the set of electrolyser units previously set, for example by a system controller or a plant controller of the electrolysis plant, during a normal operation mode. During normal operation mode, for example the plant controller gives a reference value, i.e. a basic operation set point reference value, as to how the operating point should be selected, i.e. how high the direct current value should be or how high the active power inputs of the electrolyser units should be, to the lower-level controller, e.g., converter controller dedicated to controlling the AC/DC conversion of an individual of the one or more electrolysis systems of the electrolysis plant, and the individual converter controller then independently from the plant controller adjusts converter parameters, such as firing angles of thyristor rectifiers, so that this reference value can be maintained. During power oscillation damping mode, the lower-level controller inherently features a damping characteristic in the specified power oscillation frequency range and may even change the basic operation set point by changing the input DC value, and inform the plant controller of the change in the DC value so that the plant controller can adjust parameters of the electrolyser units if necessary. And the dynamic change of the operation set point of the power consumption of the set of electrolyser units can be directly triggered by the lower-level control units with significantly faster controller time constants than those of the plant controller.

In another embodiment, where the deviation is monitored on plant controller level and then distributed to the electrolysis systems, the plant controller must be or comprise a fast-acting control unit. Fast-acting controllers can be, for example, field programmable gate array (FPGA) based controllers. In another example embodiment, a cycling-time of the controller may be increased during POD mode.

Depending on the embodiment, the extent of the countermeasure, i.e., of the change of the dynamic change of the operation set point of the power consumption of the set of electrolyser units, by the controller arrangement may take into account a pre-defined damping ratio. For example, it may be defined that each subsequent power oscillation swing should be damped down by 2% compared to previous one or may be defined depending on power grid requirements, e. g., to achieve a power oscillation damping in the power supply network to ± 0,5-1% of the active power exchange within not more than, e.g., 20 to 180 seconds.

In an embodiment of the electrolysis plant, the controller arrangement is configured to put an electrolysis system of the electrolysis plant into a hot standby state that allows for fast or immediate restart, if for any reason the electrolysis system should trip during the POD event. In a preferred embodiment, this hot standby state includes an activation of a polarization rectifier, which prevents the voltages applied to the electrolysis cells in the electrolyser units to drop below the Nernst voltage (possibly with a safety margin added to this voltage level).

The electrolysis controller may not only control the active power counter-oscillation by changing the power-input by controlling the power-supply, but also by influencing the characteristics of the electrolysis cells, specifically the power consumption or cell voltage. In an exemplary embodiment such a controller may oscillate the cooling of the electrochemical cells to periodically change the cell voltage and thus the power intake for a given DC current setpoint.

In an example embodiment of the electrolysis plant the controller arrangement is or comprises a programmable apparatus. The programmable apparatus refers to any data processing unit such as a central processing unit (CPU), microprocessor, microcontroller or any other processor. The memory can comprise a computer program product corresponding to a computer program adapted to configure the programmable apparatus of the controller arrangement to carry out the method according to the first aspect of the invention.

According to a third aspect of the invention, a computer program product comprises code portions that, when executed on a programmable apparatus of a controller arrangement of an electrolysis plant according to the abovementioned example embodiment of the second aspect of the invention, enable the electrolysis plant to execute steps of the method according to the first aspect of the invention.

Further, according to a fourth aspect of the invention, a computer readable storage medium, has stored therein a computer program product according to the third aspect of the invention. And according to a fifth aspect of the invention, a data carrier signal is provided that carries a computer program product according to the third aspect of the invention. The computer program product may be provided on a computer readable storage medium, **i.e.,** a data carrier, such as a CD, DVD, memory card or other storage medium, in particular a non-volatile storage medium, stored with data that is loadable in a memory of the programmable apparatus of the controller arrangement, wherein the data represents the computer program. As another example, the data carrier may further be a data connection, such as a telephone cable or data cable or a wireless connection, and the computer program product may be represented as data carrier signal transmitted via the data carrier.

While not explicitly described, the presented embodiments may be employed in any combination or sub-combination.

The properties, features and advantages of the invention described above, and the manner in which they are achieved, will become clearer and more clearly understood in connection with the following description of the exemplary embodiments, which are explained in more detail in connection with the drawings, wherein
- Fig. 1: schematically illustrates an example of an electrolysis plant with power oscillation damping (POD) mode according to an embodiment of the invention;
- Fig. 2: schematically illustrates an example of a method for power oscillation damping in a power supply network by means of a connected electrolysis plant according to another embodiment of the invention; and
- Fig. 3: illustrates active power flow signal characteristics at a point of connection of an electrolysis plant to an AC power supply network.

It is to be understood that other embodiments may be used and structural or logical changes may be made without departing from the scope of the present invention. It is to be understood that the features of the various exemplary embodiments described above and below may be combined with each other unless specifically stated otherwise. The description is therefore not to be taken in a limiting sense, and the scope of the present invention is defined by the appended claims.

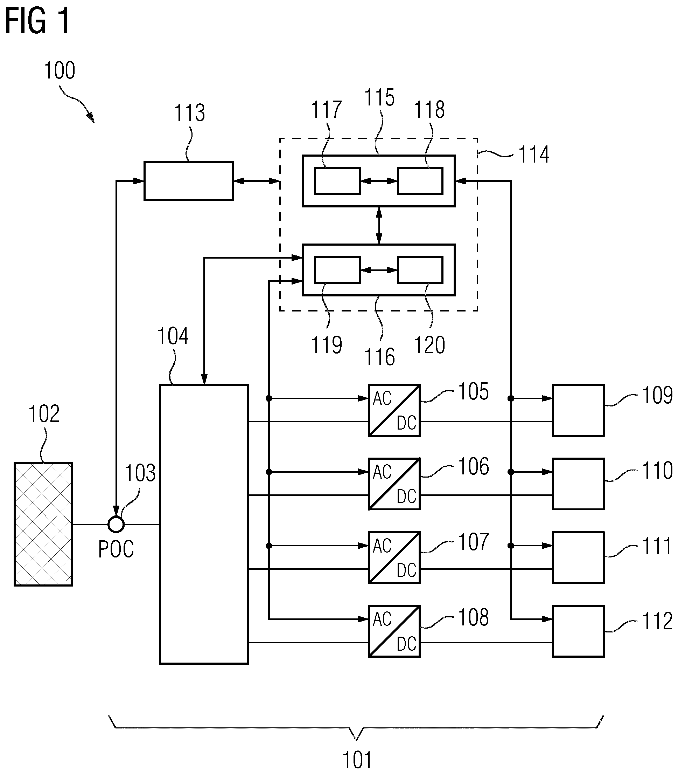

Referring to Fig. 1, an example of an electrolysis plant with power oscillation damping (POD) mode according to an embodiment of the invention is schematically illustrated. The shown electrolysis plant 100 with power oscillation damping (POD) mode comprises one electrolysis system 101 connected to an AC power supply network 102 via a point of connection (POC) 103. However, other electrolysis plants may consist of more than one electrolysis system, e.g., more than one system like electrolysis system 101 and connected to the same point of connection 103. For example, in these larger plants, several of such electrolysis systems can be connected in parallel on a same medium voltage alternating current (MVAC) bus, which is coupled to an overlaying high voltage (HV) grid, i.e., the AC power supply network, via a grid coupling transformer.

The shown electrolysis system 101 comprises a transformer unit 104 connected with its primary side to the POC 103 and with its secondary side to an AC side, i.e., primary sides, of a set of rectifier units 105, 106, 107, 108 operating in parallel configured to provide direct current (DC) to a set of four electrolyser units 109, 110 111, 112, i.e., electrolysis module rows, connected to the DC side, i.e., the secondary sides, of the rectifier units 105, 106, 107, 108, which may, for example, be thyristor-based rectifier units. The transformer unit 104 connected to the rectifier units 105, 106, 107, 108 may form a multipulse operation system. For example, the transformer unit 104 may comprise two three-winding transformers with a phase difference of 15° between them forming a so-called 24-pulse operation system.

Further, the electrolysis system 101 contains means 113 for measuring a magnitude and an oscillation frequency of a power oscillation signal corresponding to an active power signal in the connected AC power supply network 102. The measuring means 113 can be any measurement device for determining the magnitude and oscillation frequency of the power oscillation signal, e.g., by determining voltage and current signals that allow to calculate and evaluate the power oscillation signal. In the shown embodiment, the power oscillation signal measured at the POC 103 directly corresponds to a superimposed active power signal in the connected AC power supply network 102.

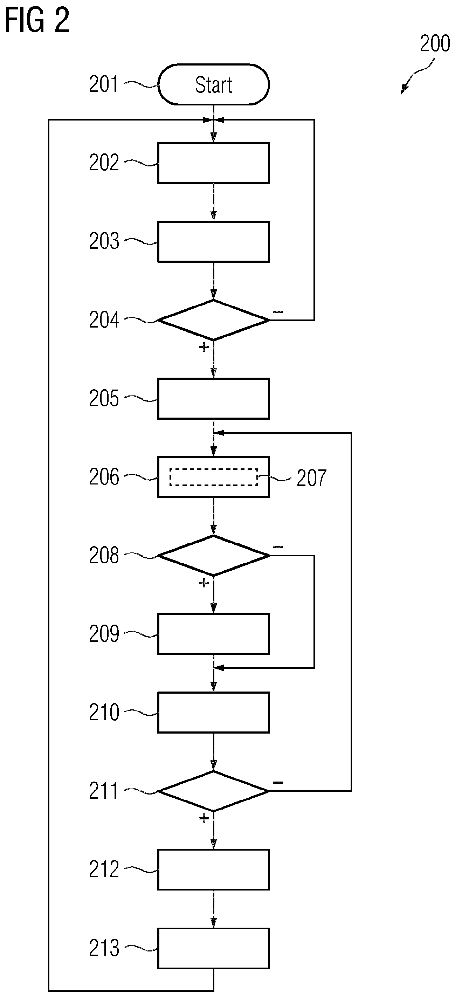

A controller arrangement 114 is configured to operate the electrolysis plant 100 according to a method that uses the electrolysis plant 100 for power oscillation damping in the connected AC power supply network 102. A preferred example of the method is illustrated and described in connection with Fig. 2 below.

In the shown embodiment, the controller arrangement 114 consists of at least two levels of controllers, a system controller 115, i.e., an electrolysis system controller, and a converter controller as a lower-level controller 116. Furthermore, plant controller functionality as a third level of control is provided directly by an additional plant controller (not shown) or indirectly by means of the system controller 115 communicating with the plant controller (not shown). During normal operation mode, the plant controller 115 sets an operation set point of a DC current of the set of electrolyser units 109, 110 111, 112 by giving a basic operation set point reference value, as to how the operating point should be selected, i.e. how high the direct current value should be or how high the active power at the direct current inputs of the electrolyser units 109, 110 111, 112 should be, to the lower-level controller 116, which then adjusts individual parameters of the AC/DC conversion, in particular of the rectifier units 105, 106, 107, 108, e.g.**,** firing angles of thyristor rectifiers, so that this reference value can be achieved and maintained.

During power oscillation damping mode, the lower-level controller 116 inherently features a damping characteristic in the specified power oscillation frequency range and is configured to override and dynamically change depending on a change of a magnitude of the active power signal in the AC power supply network 102. In parallel, the change and magnitude of the superimposed active power signal is determined by the measuring means 113 and an evaluation of its characteristics is performed by the lower-level controller 116. Based on the outcome, the set point of a power consumption of the set of electrolyser units 109, 110 111, 112 previously set by the plant controller during normal operation mode, can be adjusted by the lower-level controller 116 by changing the input DC value and inform the system controller 115 and the plant controller about the change in the DC value. This enables the system controller 115 to adjust parameters of the electrolyser units 109, 110 111, 112, if necessary.

The shown controller arrangement 114 consists of programmable controllers. The system controller 115 and the lower-level controller 116 are both provided as programmable apparatus, i.e., a programmable device, consisting at least of a processor 117, 119 and a memory 118, 120, wherein in the memory 118, 120 a computer program product is stored, corresponding to a computer program adapted to configure the programmable apparatus 117, 119 of the controller arrangement 114 to carry out the method for power oscillation damping.

Referring to Fig. 2, an example of a method 200 for power oscillation damping in a power supply network by means of a connected electrolysis plant according to an embodiment of the invention is schematically illustrated, wherein the electrolysis plant comprises one or more electrolysis systems, each having at least a transformer unit, one or more rectifier units, and a set of electrolyser units which is connected to a direct current (DC) side of the one or more rectifier units and may, for example, correspond to the electrolysis system shown in Fig. 1. The method 200 begins in a start state 201, wherein the electrolysis plant is started and operated in a normal operation mode without power oscillation damping (POD).

Then, in first and second steps a magnitude and a main oscillation frequency of an active power signal in the power supply network is measured 202, e.g., at the POC, and a deviation of an amplitude for a signal with a frequency below the system's main frequency - also called superimposed frequency - is determined 203.

In a subsequent step, it is determined 204, if said amplitude is greater than a pre-defined threshold. Depending on the embodiment, the pre-defined threshold may or not be set to 0.01 - 1% of the system's main frequency amplitude.

If it is determined that the amplitude, i.e., the superimposed frequency's amplitude, is not greater than the pre-defined threshold (in Fig. 2 indicated as "-")**,** the electrolysis plant refrains from switching into power oscillation damping mode, but remains in normal operation mode, and the method continues with the step of measuring 202 the magnitude and oscillation frequency of the power oscillation signal. However, if it is determined that the superimposed frequency's amplitude is greater than the pre-defined threshold (in Fig. 2 indicated as "+"), i.e., if a power oscillation event has been detected, the method continues with changing 205 the operation mode of the electrolysis plant from normal operation mode into power oscillation damping mode, and in the power oscillation damping mode, an operation set point of a power consumption of the set of electrolyser units is changed 206 depending on a change of the magnitude of the active power signal. In an example embodiment this may comprise limiting 207 the change to keep the operation set point between a lower operating limit and an upper operating limit of the set of electrolyser units defined with respect to safety considerations of the electrolysis processing performed in the set of electrolyser units. In a further example, the step of limiting 207 the change comprises limiting said change to keep the operation set point at least a further safety margin away from at least one of the lower operating limit and the upper operating limit.

In a next step it is determined 208, if the frequency of the superimposed oscillation exceeding the amplitude threshold, i.e., the pre-defined threshold, is smaller than a (first) frequency threshold. The frequency threshold depends on the physical properties of the electrolysis systems, in particular on the characteristics and technology used in the set of electrolyser units. If the frequency of the superimposed oscillation exceeding the amplitude threshold is at or above the frequency threshold, the power oscillates with a frequency too high to cause a measurable oscillation in the gas production, pressure and mass flow in the electrolyser units of the electrolysis system.

If it is determined that the frequency of the superimposed oscillation exceeding the amplitude threshold is smaller than the (first) frequency threshold (in Fig. 2 indicated as "+"), one or more non-electric processing parameters, i.e., downstream parameters of the one or more electrolysis systems of the electrolysis plant which are not related the AC/DC power conversion and provision of DC current to the electrolyser units but to an adjustment of mass-flow, pressures etc., of at least one electrolysis process carried out in the set of electrolyser units are adjusted 209 before the method continues with the next step.

Otherwise (in Fig. 2 indicated as "-"), the step of adjusting one or more non-electric processing parameters 209 is left out and the method directly continues with the next step.

In the next step, when in power oscillation damping mode, the amplitude of the superimposed oscillation, i.e., the amplitude for an active power signal with a frequency below the system's main frequency is (continuously) monitored 210.

It is determined, if the monitored amplitude is not greater than the pre-defined threshold anymore 211.

If this is not true (in Fig. 2 indicated as "-"), i.e., if the amplitude is still greater than the pre-defined threshold, the method continues with the step of changing 206 the operation set point of a power consumption of the set of electrolyser units depending on the change of the magnitude of the active power signal.

Otherwise, i.e., if the monitored amplitude is not greater than the pre-defined threshold anymore (in Fig. 2 indicated as "+"), the operation mode of the electrolysis plant is changed 212 from the power oscillation damping mode to the normal operation mode.

In a subsequent step, in the normal operation mode, the operation set point of the power consumption of the set of electrolyser units is changed 213 to a pre-defined operation set point. That is, once the amplitude of the superimposed oscillation exceeding the pre-defined threshold, i.e., the amplitude threshold, returns into the defined dead band, the power oscillation event is considered over and the specifically activated POD mode can be ended. The electrolysis plant changes automatically or, in an alternative embodiment, with approval of an operator, to pre-defined set points. In a preferred example embodiment, the pre-defined set points are the pre-fault set points, which had been stored at the beginning of the power oscillation event before switching into POD mode.

The method then continues in normal operation mode with the step of measuring 202 the amplitudes of the superimposed active power oscillations with frequencies below the system's main frequency in the power supply network 202, followed by determining 203 if the amplitudes of these signals exceed a pre-defined threshold.

The method ends, e.g., when the electrolysis plant is shut down.

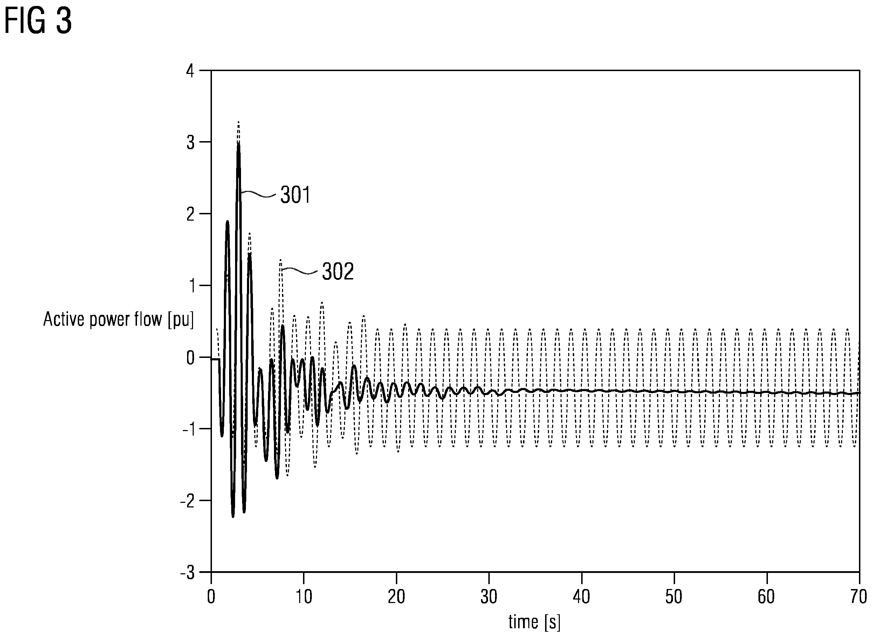

Referring now to Fig. 3, active power flow signal characteristics at a point of connection of an electrolysis plant to an AC power supply network are shown. In the shown characteristics, first and second oscillating active power flow signals 301, 302 are shown. The active power flow (provided in [pu] (per-unit for a single phase; expression of a system quantity as fraction of a defined base unit quantity)) over time is shown during and after encountering a power oscillation event in the AC power supply network, i.e., the AC power grid, for example, when a network participant such as a large power generating plant or a large load or power consuming plant is switched off or on, or other disturbances in the network occur. Such events may cause an oscillating change in the power provided by the network that may decay over time. In the characteristic of the first oscillating active power flow signal 301, the power oscillation event superimposed on the active power flow signal decays quickly, e.g., because of a high damping factor achieved by operating the connected electrolysis plant according to the method described in connection with Fig. 2, while the power oscillation event superimposed on the active power flow signal as shown in the second oscillating active power flow signal 302 decays slowly.

Those skilled in the art will recognize that some boundaries between blocks in Fig. 1 and Fig. 2 are merely illustrative and that alternative embodiments may merge blocks or impose an alternative composition of functionality upon various blocks. It should be noted that, depending on the embodiment, method steps, although described and illustrated according to certain sequence or order of steps, may at least partly be carried out in a different order or simultaneously. Other steps may be added and certain steps described here may be left out.

Although the invention has been illustrated and described in detail by the shown preferred embodiments, the invention is not limited by the disclosed examples and other variations can be derived therefrom by those skilled in the art without departing from the scope of the invention.

In summary, a method 200 for power oscillation damping in an AC power supply network by means of a connected electrolysis plant is presented, wherein the electrolysis plant comprises one or more electrolysis systems, each having at least a transformer unit, one or more rectifier units, and a set of electrolyser units connected to a DC side of the one or more rectifier units. The method 200 comprises measuring 202 a magnitude and an oscillation frequency of a power oscillation signal corresponding to an active power signal in the AC power supply network, and determining 203 an amplitude for signals, i.e. oscillations, with frequencies below the system's main frequency of the active power signal; and if said amplitude(s) is greater than a pre-defined threshold 204, changing 205 an operation mode of the electrolysis plant from a normal operation mode into a power oscillation damping mode and in said power oscillation damping mode, changing 206 an operation set point of a power consumption of the set of electrolyser units depending on a change of the magnitude of the active power signal.

Further, an electrolysis plant, a computer program product, a computer readable storage medium and a data carrier signal are provided.

## Claims

1. Method (200) for power oscillation damping in an AC power supply network by means of a connected electrolysis plant, wherein the electrolysis plant comprises one or more electrolysis systems, each having at least a transformer unit, one or more rectifier units, and a set of electrolyser units connected to a DC side of the one or more rectifier units, the method (200) comprising
measuring (202) a magnitude and a main frequency of a power oscillation signal corresponding to an active power signal in the AC power supply network, and
determining (203) amplitudes for one or more oscillations with frequencies below the main frequency of the active power signal; and if at least one of said amplitudes is greater than a pre-defined threshold (204),
changing (205) an operation mode of the electrolysis plant from a normal operation mode into a power oscillation damping mode and in said power oscillation damping mode,
changing (206) an operation set point of a power consumption of the set of electrolyser units depending on a change of the magnitude of the active power signal.

2. The method as claimed in claim 1, further comprising adjusting (209) one or more non-electric processing parameters of at least one electrolysis process carried out in the set of electrolyser units.

3. The method as claimed in claim 2, wherein said step of adjusting (209) one or more non-electric processing parameters is only carried out if the frequency of said one or more oscillations is below a first frequency threshold (208).

4. The method as claimed in claim 3, wherein the first frequency threshold is at least 10 Hz**.**

5. The method as claimed in any of claim 2 to 4, wherein said step of adjusting (209) one or more non-electric processing parameters is carried out for an adjustment of power intake by the set of electrolysis units, if the frequency of the one or more oscillations is below a second frequency threshold.

6. The method as claimed in any of the preceding claims, wherein the step of changing (206) the operation set point of the power consumption of the set of electrolyser units depending on the change of the magnitude of the active power signal comprises limiting (207) said change to keep the operation set point between a lower operating limit and an upper operating limit of the set of electrolyser units defined with respect to safety considerations of the electrolysis processing performed in the set of electrolyser units.

7. The method as claimed in claim 6, wherein the step of limiting (207) said change to keep the operation set point between the lower operating limit and the upper operating limit of the set of electrolyser units comprises limiting said change to keep the operation set point at least a further safety margin away from at least one of the lower operating limit and the upper operating limit.

8. The method as claimed in any of the preceding claims, wherein the step of measuring (202) a magnitude and an oscillation frequency of a power oscillation signal corresponding to an active power signal in the AC power supply network comprises measuring an input voltage signal and an input current signal at a point of connection of the electrolysis plant to the AC power supply network.

9. The method as claimed in any of the preceding claims, further comprising,
when in said power oscillation damping mode, monitoring (210) said amplitudes of said one or more oscillations and if said at least one of said amplitudes is not greater than the pre-defined threshold any more (211),
changing (212) the operation mode of the electrolysis plant from the power oscillation damping mode to the normal operation mode and in said normal operation mode,
changing (213) the operation set point of the power consumption of the set of electrolyser units to a pre-defined operation set point.

10. Electrolysis plant (100) with power oscillation damping mode, comprising
one or more electrolysis systems (101), each having at least a transformer unit (104), one or more rectifier units (105, 106, 107, 108) and a set of electrolyser units (109, 110, 111, 112) connected to a DC side of the one or more rectifier units (105, 106, 107, 108);
means (113) for measuring a magnitude and an oscillation frequency of a power oscillation signal corresponding to an active power signal in a connected power supply network (102); and
a controller arrangement (114) configured to operate the electrolysis plant (100) according to a method for power oscillation damping as claimed in any of the preceding claims.

11. The electrolysis plant as claimed in claim 10, wherein the controller arrangement (114) comprises an electrolysis system controller (115) and at least one lower-level controller (116) configured to override and dynamically change depending on a change of a magnitude of an active power signal in the power supply network (102) an operation set point of a power consumption of the set of electrolyser units (109, 110, 111, 112) previously set during a normal operation mode.

12. The electrolysis plant as claimed in claim 10 or claim 11, wherein the controller arrangement (114) is or comprises a programmable apparatus.

13. Computer program product, comprising code portions that, when executed on a programmable apparatus of a controller arrangement (114) of an electrolysis plant (100) according to claim 12, enable the electrolysis plant (100) to execute steps of a method (200) as claimed in any of the claims 1 to 9.

14. Computer readable storage medium, comprising a computer program product as claimed in claim 13.

15. Data carrier signal carrying a computer program product as claimed in claim 13.
